(19) Europäisches Patentamt
European Patent Office
Office européen des brevets

(11) Numéro de publication: **0 285 522 B1**

(12) **FASCICULE DE BREVET EUROPEEN**

(45) Date de publication de fascicule du brevet: **09.12.92**

(51) Int. Cl.[5]: **H04Q 7/04**, H04Q 7/02

(21) Numéro de dépôt: **88400802.0**

(22) Date de dépôt: **01.04.88**

(54) **Procédé pour la gestion d'appels dans un réseau radio composé d'une pluralité de stations interconnectées entre elles sur une même fréquence par un serveur.**

(30) Priorité: **03.04.87 FR 8704723**

(43) Date de publication de la demande:
**05.10.88 Bulletin 88/40**

(45) Mention de la délivrance du brevet:
**09.12.92 Bulletin 92/50**

(84) Etats contractants désignés:
**DE GB IT**

(56) Documents cités:

| | |
|---|---|
| **EP-A- 0 069 275** | **EP-A- 0 177 094** |
| **DE-A- 2 139 402** | **DE-A- 2 812 009** |
| **FR-A- 2 362 536** | **US-A- 4 012 597** |

(73) Titulaire: **THOMSON-CSF**
**51, Esplanade du Général de Gaulle**
**F-92800 Puteaux(FR)**

(72) Inventeur: **Journeau, Rémy**
**THOMSON-CSF SCPI-19, avenue de Messine**
**F-75008 Paris(FR)**

(74) Mandataire: **Lincot, Georges et al**
**THOMSON-CSF SCPI**
**F-92045 PARIS LA DEFENSE CEDEX 67(FR)**

**EP 0 285 522 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé pour la gestion d'appels dans un réseau radio composé d'une pluratité de stations interconnectées entre elles sur une même fréquence par un serveur. Elle s'applique aux transmissions numériques sur voie radio quelconque, du type de celles décrites par exemple dans les demandes de brevet EP 0 069 275 et FR 2 362 536.

Le procédé permet notamment dans le cadre de réseaux radio à l'alternat l'accès de plusieurs demandeurs sur une même fréquence, un seul demandeur étant actif, les autres restant en file d'attente et étant appelés automatiquement en fonction de leur priorité.

On sait que dans les réseaux radio travaillant en alternat dans la gamme des ondes hautes fréquences, les communications sont établies par des opérateurs qui enregistrent les appels au fur et à mesure de leur arrivée. Du fait que ces opérations ont lieu manuellement il arrive que certains messages qui ont des priorités plus importantes que d'autres, se retrouvent dans la file d'attente à des endroits qui ne correspondent pas aux urgences demandées pour leur transmission. Ceci est préjudiciable par exemple, aux messages "flash" qui doivent être, par principe, transmis sans délais à leurs destinataires.

Le but de l'invention est de rendre la gestion des appels dans les réseaux radio entièrement automatique en évitant les inconvénients précités.

A cet effet, l'invention a pour objet, un procédé pour la gestion d'appels dans un réseau radio composé d'une pluralité de stations demanderesses d'une fréquence libre du réseau interconnectées entre elles par un serveur du type consistant à allouer à chaque station une fraction de temps entre deux émissions successives du server, pour transmettre au serveur l'appel de la station et la priorité du message qu'elle vaut transmettre, caractérisé en ce qu'il consiste à constituer dans le serveur une liste d'attente des messages en fonction de l'ordre d'arrivée des appels des autres stations et des priorités de leurs messages et à diffuser la liste d'attente à l'ensemble des stations pour permettre à la station qui se reconnaît en tête de liste de prendre la fréquence.

Le procédé selon l'invention présente l'avantage qu'il permet une gestion entièrement automatique des messages dans des liaisons radio à l'alternat entre plusieurs stations d'un réseau en tenant compte des priorités allouées aux messages à transmettre.

En constituant et en diffusant aux stations abonnées du réseau des listes d'attente où il est tenu compte des priorités des messages que ces derniers veulent envoyer, le procédé permet aux abonnés d'être servis dans l'ordre des priorités demandées, en évitant comme cela a lieu dans les systèmes de gestion employant des opérateurs, de relancer des appels radio lorsque la fréquence se libère.

D'autres caractéristiques et avantages de l'invention apparaîtront ci-après à l'aide de la description qui va suivre faite en regard des dessins annexés qui représentent :

- la figure 1 une représentation simplifiée d'un réseau de communication auquel s'applique l'invention ;
- la figure 2 un diagramme représentant les instants d'émission des stations relativement au serveur ;
- les figures 3 à 5 des organigrammes pour illustrer les différentes étapes du procédé selon l'invention ;
- la figure 6 l'organisation d'une station ;
- la figure 7 l'organisation d'un serveur ;
- les figures 8A, 8B et 8C des formats types de messages transmis.

Suivant la représentation de la figure 1, le réseau de communication auquel s'applique l'invention, se compose d'une pluralité de stations $SB_1$ ... $SB_n$ en communication avec un serveur SA.

Suivant l'invention, lorsqu'une fréquence est libre pour transmettre des messages, le serveur SA émet de la façon qui est représentée à la figure 2, des signaux de balise régulièrement espacés dans le temps pour indiquer aux autres stations les intervalles de temps durant lesquels elles peuvent transmettre leurs appels.

Les stations $SB_i$ émettent, durant les périodes de silence de la station SA, des messages pour marquer leur intention d'émettre sur la fréquence indiquée comme libre par la station SA. Pour cela, le temps T qui est imparti aux stations $SB_i$ entre deux intervalles d'émission de la station SA est divisé en k cases de temps de longueur T/k. Chacune des stations $SB_i$ peut alors émettre son appel sur l'une seulement des cases de longueur T/k. Le choix des cases est effectué de façon aléatoire, car si le nombre de cases est relativement grand deux stations intervenantes $SB_i$ et $SB_j$ ont une probabilité relativement faible de $1/2^k$ de rentrer en collision.

Cependant, pour des messages très prioritaires, messages "flash" par exemple, on pourra convenir que les stations $SB_i$ choisiront automatiquement la première case et de façon aléatoire une des cases restantes pour leur permettre de discriminer deux appels prioritaires.

Le traitement effectué par le serveur SA consiste à décoder les appels contenus dans chacune des cases et à constituer une liste d'attente en tenant compte de l'instant d'arrivée et de la priorité des appels.

L'instant d'arrivée est déterminant si les priorités de deux appels reçus dans deux cases j et k sont les mêmes. Dans ce cas, si j < k, l'appel j est placé devant l'appel k. Inversement, si l'appel incident dans le case k est plus prioritaire que celui reçu dans la case j et si j est plus petit que k, l'appel contenu dans la case k est placé avant celui de la case j.

Une fois que la liste d'attente est établie, le serveur SA diffuse la liste aux différentes stations $SB_1$ à $SB_N$. Seule la station $SB_i$ retrouvant ses caractéristiques (indicatifs) en tête de liste peut continuer à occuper la fréquence. Les autres stations attendent le défilement de la liste d'attente et restent à l'écoute de la diffusion d'une nouvelle liste en attendant que leur indicatif soit en tête de liste pour occuper à leur tour la fréquence.

Une illustration des étapes 1 à 20 du procédé selon l'invention est donnée aux figures 3, 4 et 5. Lorsque le serveur SA signifie aux autres stations $SB_i$ du réseau qu'une fréquence est libre, il émet comme cela est référencé en 1 sur la figure 3, des signaux de balise à destination des autres stations $SB_i$. Ces signaux de balise sont composés par des signaux d'émission séparés par des temps morts de durée constante T. Ils sont reçus par les stations $SB_i$ qui testent à l'étape 3 si elles ont un message à transmettre. Si une station $SB_i$ a un message à transmettre, elle passe à l'exécution des étapes 4 à 8 de l'organigramme de la figure 3 ou reste, dans le cas contraire, en écoute des signaux de balise. Chacune des stations qui a un message à transmettre exécute alors les étapes 4 et 5 en tirant une case de temps aléatoire de durée T/k et en constituant une séquence d'appel composée par un numéro de priorité et par l'indicatif de la station. Indicatif et priorité sont alors transmis à l'étape 6 dans la case de durée T/k choisie à destination du serveur SA et la station passe alors à l'étape 7 en mode réception pour attendre à l'étape 8 la liste des priorités qui est constituée par le serveur SA en fonction des appels qu'il reçoit des autres stations. Le procédé passe alors à l'exécution des étapes 9 à 12 de l'organigramme représenté à la figure 4. A l'étape 9 le serveur SA reçoit les séquences d'appel puis il effectue à l'étape 10 un tri en fonction du moment d'arrivée des priorités. Ce tri aboutit à l'étape 11 à la constitution d'une liste d'attente qui est diffusée à l'étape 12.

Lorsque la liste d'attente est diffusée, chaque station $SB_i$ exécute alors les étapes du procédé qui sont représentées à la figure 5. A l'étape 13 chaque station recherche dans la liste des stations en attente qu'elle a reçue, son indicatif. Si elle ne le trouve pas à l'étape 14, elle se place aussitôt en attente d'une autre liste ou choisit éventuellement une autre fréquence. Si son indicatif est en tête de liste elle prend aussitôt possession à l'étape 18 de la fréquence qui est ainsi libérée pour transmettre son message à l'étape 19. En fin de transmission, elle se place en attente de nouveaux signaux de balise pour réitérer éventuellement son processus de transmission.

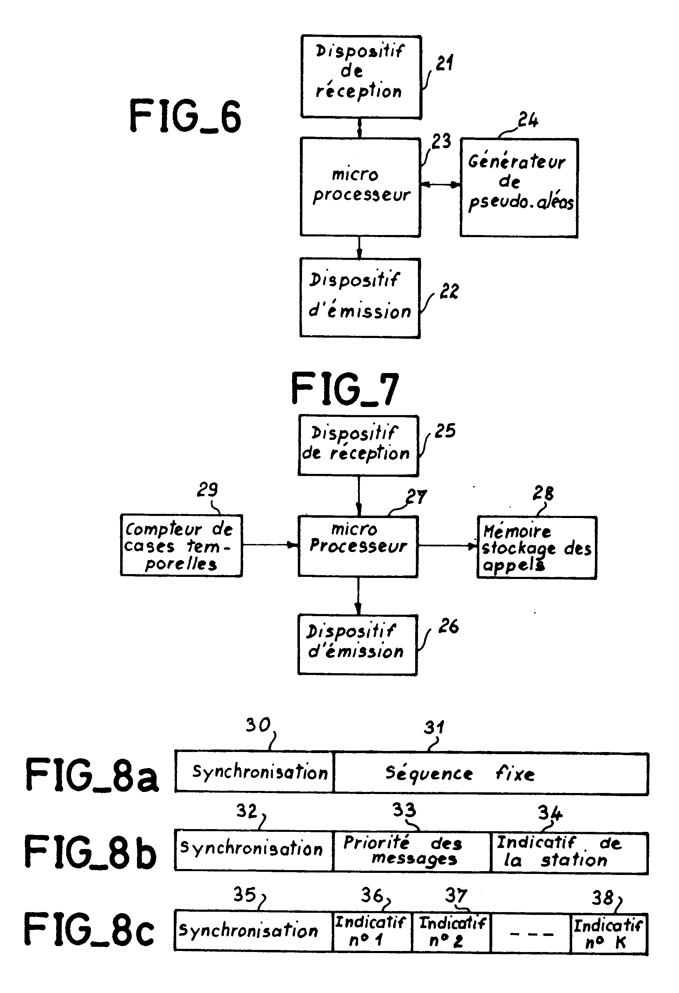

La mise en oeuvre du procédé selon l'invention qui vient d'être décrit peut être aisément exécutée à l'aide de stations $SB_i$ et serveur SA possédant des dispositifs de réception et d'émission organisés autour d'un microprocesseur ou tout dispositif équivalent convenablement programmé pour l'exécution des étapes 1 à 20 du procédé précédemment décrit à l'aide des figures 3 à 5. Deux organisations simplifiés correspondantes d'une station $SB_i$et d'un serveur sont représentées aux figures 6 et 7. Dans l'organisation de la figure 6 la station $SB_i$ comprend un dispositif de réception 21 et un dispositif d'émission 22 couplés tous deux à un microprocesseur 23. Le microprocesseur 23 est couplé à un générateur de pseudo aléas 24 pour permettre le choix des cases temporelles de durée T/k. Dans l'organisation de la figure 7 le serveur comprend de manière similaire aux autres stations, un dispositif de réception et un dispositif d'émission 26 couplés entre eux par un microprocesseur 27. Le microprocesseur 27 est également couplé entre une mémoire de stockage des appels 28 et un compteur de cases temporelles 29. L'ensemble de ses éléments fait partie des éléments connus de l'état de la technique et leur description n'a pas besoin d'être plus longuement détaillée.

La structure des messages échangés entre stations $SB_i$ et serveur est représentée aux figures 8A, 8B et 8C. La figure 8A représente le format des messages de balise transmis par la station serveur SA. Ce message est constitué par deux zones 30 et 31. La zone 30 contient le mot de synchronisation et la zone 31 contient la séquence fixe des signaux permettant aux stations $SB_i$ réceptrices d'apprécier la qualité de la liaison, la station $SB_i$ n'ayant la possibilité d'émettre qu'à la fin de la zone 31. Le format du message représenté à la figure 8B est celui qui est transmis par une station appelante $SB_i$ à destination du serveur, il se compose d'une zone de synchronisation 32 suivie d'une zone 33 indiquant la priorité du message que la station veut transmettre et d'une zone 34 pour transmettre l'indicatif de la station. Le message représenté à la figure 8C transmet la liste des stations établie par la station SA à destination des autres stations, le format de ce message est constitué par une zone de synchronisation 35 suivie par les zones 36, 37 et 38 mentionnant les indicatifs des stations de chaque liste.

**Revendications**

1. Procédé pour la gestion d'appels dans un réseau radio composé d'une pluralité de stations interconnectées entre elles sur une même fréquence par un serveur, du type consistant à allouer (4) à chaque station une fraction de temps entre deux émissions successives du serveur pour transmettre l'appel de la station et la priorité du message qu'elle veut transmettre, caractérisé en ce qu'il consiste à constituer (10) dans le serveur une liste d'attente des messages en fonction de l'ordre d'arrivée des appels des autres stations appelantes et des priorités de leurs messages et à diffuser (12) la liste à toutes les stations pour permettre à la station appelante qui se reconnaît en tête de liste (16) de prendre la fréquence.

2. Procédé selon la revendication 1, caractérisé en ce qu'il consiste pour allouer (4) à chaque station appelante une fraction de temps entre deux intervalles de temps d'émission successifs du serveur, à partager l'intervalle entre deux émissions en un nombre déterminé k de cases de temps élémentaire successives et à attribuer à la station une des cases de façon aléatoire.

3. Procédé selon la revendication 2, caractérisé en ce qu'il consiste à affecter la première case aux messages "flash".

4. Procédé selon les revendications 2 et 3, caractérisé en ce qu'il consiste pour constituer dans le serveur la liste d'attente des messages en fonction de leur ordre d'arrivée à décoder (9) chaque appel contenu dans une case et à classer (11) les appels de chaque case en tenant compte (10) de leur instant d'arrivée et de leur prioroté, l'instant d'arrivée étant déterminant si les priorités des appels reçus sont les mêmes.

5. Procédé selon l'une quelconque des revendications 1 à 4, caractérisé en ce que chaque message d'une station appelante se compose d'une zone de synchronisation (32), d'une zone (33) indiquant la priorité du message que la station veut transmettre et d'une zone (34) indiquant l'indicatif de la station appelante.

## Claims

1. A method for the management of calls in a radio network composed of a plurality of stations which are interconnected with each other on the same frequency by a server, of the type consisting of allocating (4) to each station a fraction of time between two successive emissions of the server to transmit the call from the station and the priority of the message which it wishes to transmit, characterised in that it consists in constituting (10) in the server a waiting list of messages as a function of the order of arrival of the calls from the other calling stations and the priority of their messages and in broadcasting (12) the list to all the stations to allow the calling station, which acknowledges itself at the head of the list (16), to take the frequency.

2. A method according to Claim 1, characterised in that it consists in allocating (4) to each calling station a fraction of time between two successive emission time intervals of the server, in dividing the interval between two emissions in a predetermined number k of successive elementary time compartments and in attributing to the station one of the compartments in a random manner.

3. A method according to Claim 2, characterised in that it consists in assigning the first compartment to the "flash" messages.

4. A method according to Claims 2 and 3, characterised in that it consists, for constituting in the server the waiting list of messages as a function of their order of arrival, in decoding (9) each call contained in a compartment and in classifying (11) the calls of each compartment by taking into account (10) their instant of arrival and their priority, the instant of arrival being determinative if the priorities of the received calls are the same.

5. A method according to any one of Claims 1 to 4, characterised in that each message from a calling station is composed of a synchronisation zone (32), a zone (33) indicating the priority of the message which the station wishes to transmit and a zone (34) indicating the call signal of the calling station.

## Patentansprüche

1. Verfahren zur Verwaltung von Rufen in einem Funknetz, das aus mehreren Stationen besteht, die untereinander und auf derselben Frequenz durch einen Server verbunden sind, von derjenigen Art, die darin besteht, daß jeder Station eine Zeitspanne zwischen zwei aufeinanderfolgenden Aussendungen des Servers zugeordnet wird (4), um den Ruf der Station und die Priorität der von ihr zu übertragenden Nachricht zu übertragen, dadurch gekennzeichnet, daß in dem Server eine Warteliste für die Nachrichten in Abhängigkeit von der Reihenfolge der Ankunft der Rufe aus anderen rufenden Stationen sowie von den Prioritäten ihrer Nachrichten gebildet (10) und die Liste an alle Stationen verteilt wird (12), damit diejenige rufende Station, die erkennt, daß sie am Kopf der Liste steht (16), die Frequenz annehmen kann.

**2.** Verfahren nach Anspruch 1, dadurch gekennzeichnet, daß für die Zuweisung (4) einer Zeitspanne zwischen zwei aufeinanderfolgenden Zeitintervallen des Servers zu jeder rufenden Station das Zeitintervall zwischen zwei Aussendungen in eine bestimmte Anzahl k von elementaren aufeinanderfolgenden Zeitfenstern unterteilt wird und eines dieser Fenster der Station zufällig zugeordnet wird.

**3.** Verfahren nach Anspruch 2, dadurch gekennzeichnet, daß das erste Fenster für "Blitz"-Nachrichten reserviert wird.

**4.** Verfahren nach Anspruch 2 und 3, dadurch gekennzeichnet, daß zur Bildung der Warteschlange von Nachrichten in Abhängigkeit von ihrer Ankunftsreihenfolge jeder Ruf, der in einem Fenster enthalten ist, decodiert wird und die Rufe jedes Fensters klassifiziert werden (10) unter Berücksichtigung ihres Ankunftszeitpunktes und ihrer Priorität, wobei der Ankunftszeitpunkt bestimmend ist, wenn die Prioritäten der empfangenen Rufe gleich sind.

**5.** Verfahren nach einem der Ansprüche 1 bis 4, dadurch gekennzeichnet, daß jede Nachricht einer rufenden Station aus einer Synchronisationszone (32), einer die Priorität der von der Station zu übertragenden Nachricht anzeigenden Zone (33) und einer die rufende Station angebenden Zone (34) besteht.

FIG_3

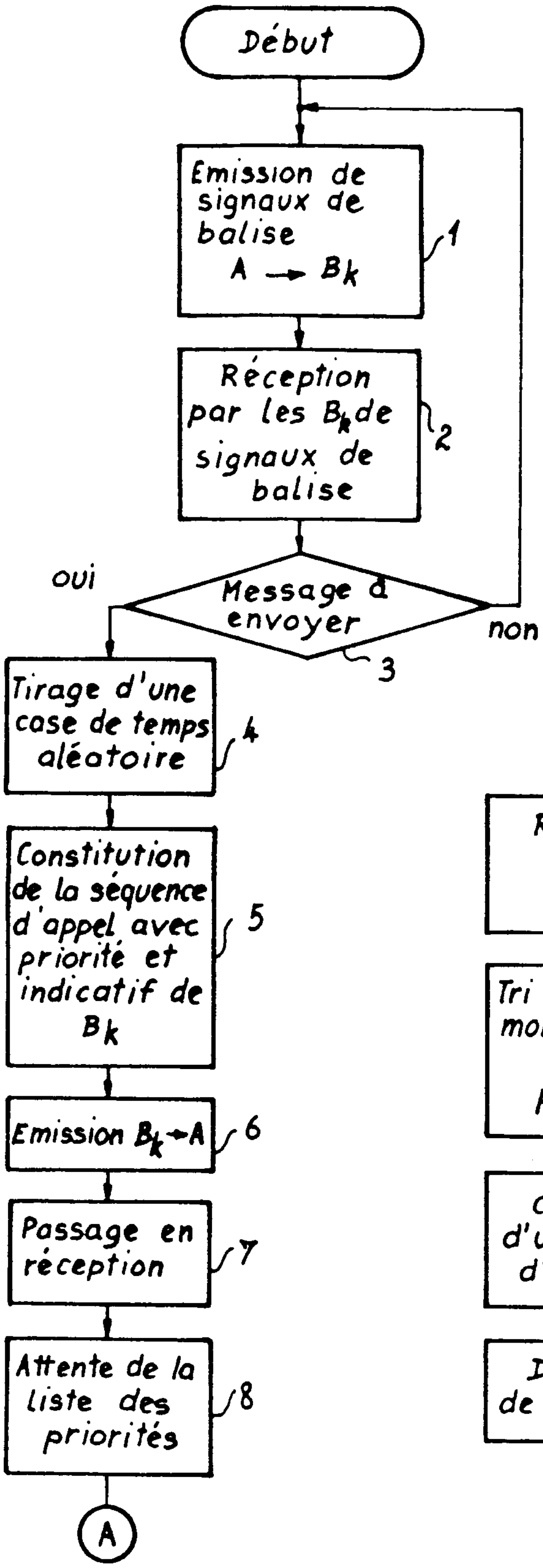


FIG_1

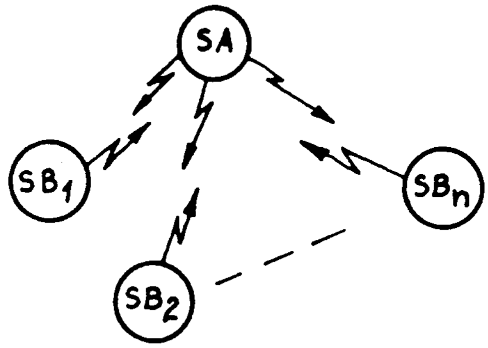


FIG_2

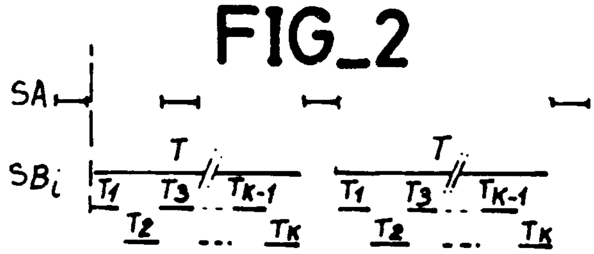


FIG_4

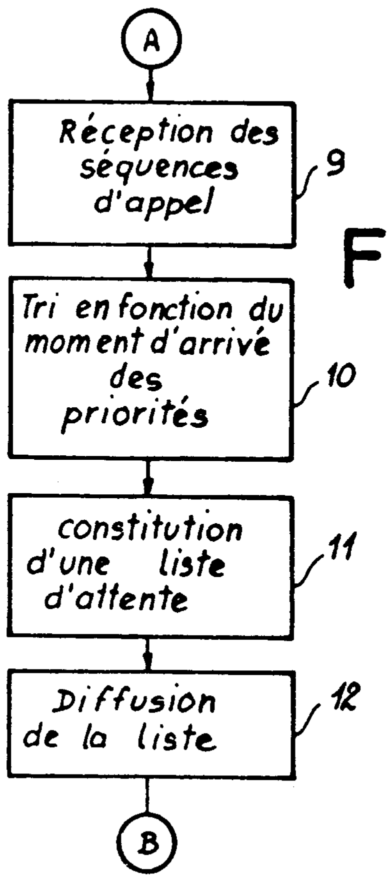

FIG_5

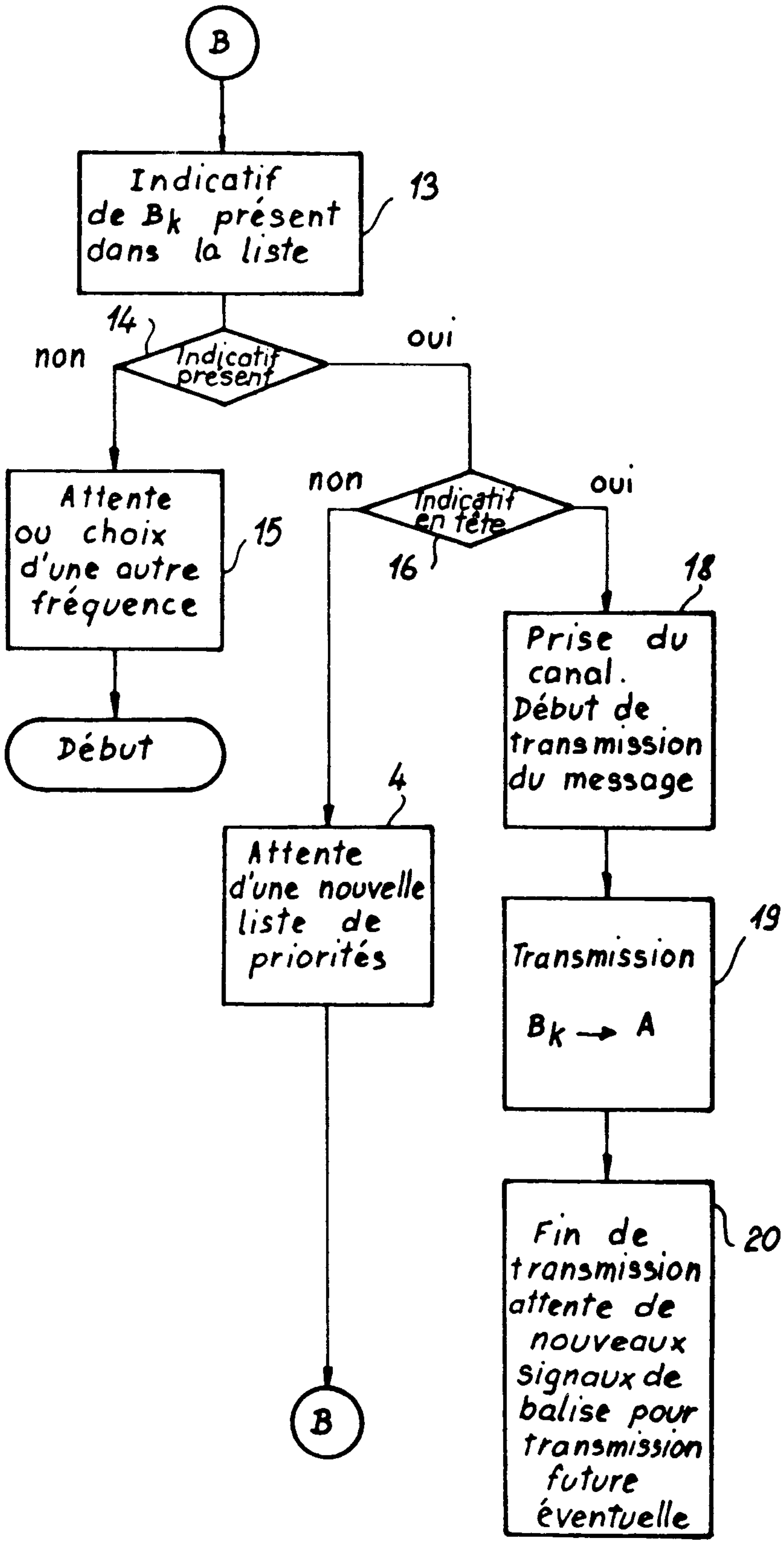
B
Indicatif de $B_k$ présent dans la liste
13
14
non
Indicatif présent
oui
Attente ou choix d'une autre fréquence
15
Début
non
Indicatif en tête
oui
16
18
Prise du canal. Début de transmission du message
4
Attente d'une nouvelle liste de priorités
Transmission
$B_k$ → A
19
Fin de transmission attente de nouveaux signaux de balise pour transmission future éventuelle
20
B

FIG_6

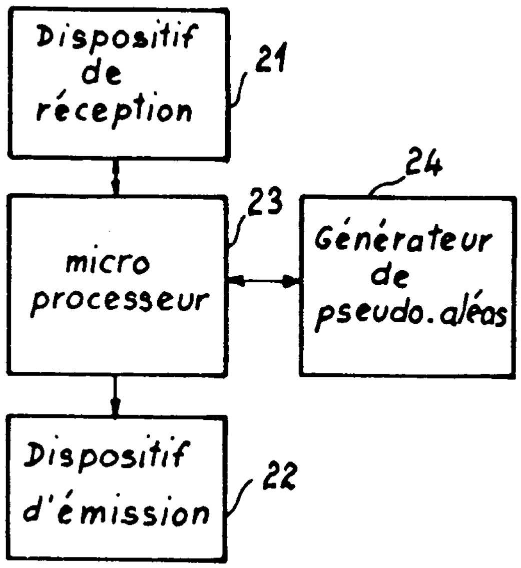


FIG_7

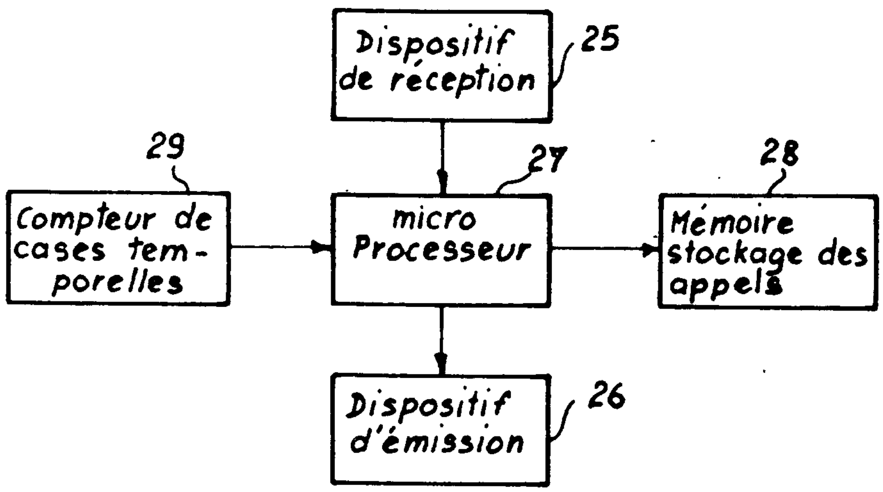


FIG_8a

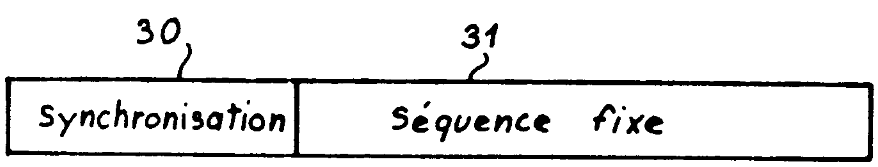


FIG_8b

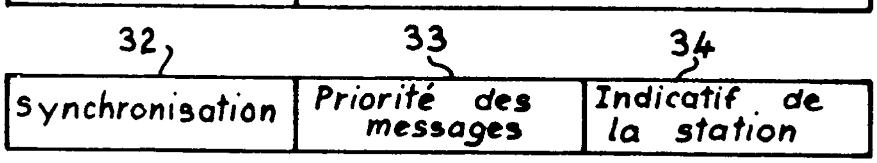


FIG_8c